# EUROPEAN PATENT APPLICATION

(11) **EP 4 682 796 A1**
(43) Date of publication of application: **21.01.2026**
(21) Application number: 24785961.4
(22) Date of filing: 27.08.2024
(51) Int. Cl.: G06Q 10/10, G06Q 10/0631, G06Q 10/0635, G06Q 10/0639, G06Q 30/02

(54) **INTEGRATED MANAGEMENT SYSTEM AND METHOD FOR LARGE-SCALE PROJECT**

(30) Priority: 28.05.2024 CN 202410675536
(71) Applicant: China Three Gorges Corporation, Wuhan, Hubei 430010 (CN); Three Gorges High-Tech Information Co., Ltd, Wuhan, Hubei 430010 (CN); China Three Gorges Construction Engineering Corporation, Beijing 101199 (CN)
(72) Inventor: JIN, Heping, Wuhan, Hubei 430010 (CN); ZHOU, Jingliang, Wuhan, Hubei 430010 (CN); HE, Wen, Wuhan, Hubei 430010 (CN); GU, Wei, Wuhan, Hubei 430010 (CN); LIU, Xiaoqing, Wuhan, Hubei 430010 (CN); WANG, Xiaohai, Wuhan, Hubei 430010 (CN); WANG, Guoxun, Wuhan, Hubei 430010 (CN); DONG, Zhenying, Wuhan, Hubei 430010 (CN); XU, Cheng, Wuhan, Hubei 430010 (CN); XU, Qing, Wuhan, Hubei 430010 (CN); GONG, Tao, Wuhan, Hubei 430010 (CN); LUO, Huiheng, Wuhan, Hubei 430010 (CN); ZHANG, Xiaomeng, Wuhan, Hubei 430010 (CN); SHEN, Yangwu, Wuhan, Hubei 430010 (CN); ZHANG, Xu, Wuhan, Hubei 430010 (CN); JIANG, Peng, Wuhan, Hubei 430010 (CN)
(74) Representative: Groth & Co. KB
(86) International application number: PCT/CN2024/114777
(87) International publication number: WO 2025/246049

(57) **Abstract**

The present application relates to the technical field of engineering management, and discloses an integrated management system and method for large-scale construction. The system includes: a budget estimation subsystem configured to acquire target construction information, and perform multi-tier categorization and coding on the target construction information to obtain budget estimation codes; a contract management subsystem configured to decompose the target construction information to generate a plurality of construction contracts, and associate the plurality of construction contracts with the budget estimation codes; a construction control subsystem configured to break down each of the construction contracts to obtain work units, perform coding on the work units to obtain unit codes, and associate engineering quantity data corresponding to each of the work units with a preset construction plan list; and a joint-control subsystem configured to perform joint-control over a construction cost, construction progress, and construction quality based on a measurement certificate form, so as to enable integrated management of the large-scale construction. The present application achieves integrated management of large-scale engineering construction.

## Description

The present application claims priority of Chinese patent application No. 202410675536.7, filed with the Chinese Patent Office on May 28, 2024 and entitled "Integrated Management System and Method for Large-Scale Construction", which is hereby incorporated by reference in its entirety.

### TECHNICAL FIELD

The present application relates to the technical field of engineering management, in particular to an integrated management system and method for large-scale construction.

### BACKGROUND

A large-scale integrated management information system uses information engineering methods to convert abstract management concepts and various complex project management rules as well as vast amounts of information data into operable, followable, verifiable, and controllable computer logic operations and judgment, transfer, and call processes, through a database management system, thereby converting scientific management into a human-machine-integrated computer management system.

large-scale construction requires high integration of a large-scale integrated management information system, but a relevant large-scale integrated management information system does not meet the integrated management need of large-scale engineering construction, resulting in a lack of efficient and unified management of information, and inability to achieve the goal of whole-process and all-round information control and management of large-scale construction management.

### SUMMARY OF THE INVENTION

In view of this, the present application provides an integrated management system and method for large-scale construction to solve the problem that a relevant large-scale integrated management information system does not meet the integrated management need of large-scale engineering construction, resulting in a lack of efficient and unified management of information, and inability to achieve the goal of whole-process and all-round information control and management of large-scale construction management.

In a first aspect, the present application provides an integrated management system for large-scale construction, the system including:
a budget estimation subsystem configured to acquire target construction information, and perform multi-tier categorization and coding on the target construction information to obtain budget estimation codes;
a contract management subsystem connected to the budget estimation subsystem, and configured to decompose the target construction information to generate a plurality of construction contracts, and associate the plurality of construction contracts with the budget estimation codes;
a construction control subsystem connected to the contract management subsystem, and configured to break down each of the construction contracts to obtain work units, perform coding on the work units to obtain unit codes, and associate engineering quantity data corresponding to each of the work units with a preset construction plan list; and
a joint-control subsystem connected to both the contract management subsystem and the construction control subsystem, and configured to generate a measurement certificate form based on the association between the construction contracts and the budget estimation codes, and the association between the engineering quantity data and the preset construction plan list, and perform joint-control over a construction cost, construction progress, and construction quality based on the measurement certificate form, so as to enable integrated management of the large-scale construction.

According to the integrated management system for large-scale construction provided in this embodiment, an information system that spans from an implementation level, through a managerial level to a decision-making level of the large-scale construction as well as external contacts is formed by the budget estimation subsystem, the contract management subsystem, the construction control subsystem, and the joint-control subsystem, which achieves integrated management of the large-scale construction, improves the overall management level of the large-scale construction, and provides the decision-making level with accurate and timely analytical decision-making information, thus achieving the goal of whole-process and all-round information control and management of the large-scale construction.

In some optional implementations, the budget estimation subsystem includes:
a tiering module configured to perform multi-tier categorization on items for budget estimation in the target construction information to obtain multi-tier budget estimation data;
a model building module configured to acquire coding requirements, and generate a coding template matrix, based on preset tier and category definition data, for the coding requirements; and
a budget estimation coding module connected to the tiering module and the model building module, and configured to code the multi-tier budget estimation data based on the coding template matrix to generate the budget estimation codes.

According to the integrated management system for large-scale construction provided in the present embodiment, multi-tier categorization is performed on the items for budget estimation to implement detailed tiering and categorization of sub-items in the items for budget estimation, thereby forming a complete and clear data system of the items for budget estimation, and the multi-tier budget estimation data is coded by using the coding template matrix, thereby achieving accurate coding of the multi-tier budget estimation data, and laying a foundation for monitoring in the subsequent engineering construction process.

In some optional embodiments, the budget estimation coding module is further configured to acquire Bill of Quantities codes, and associate the budget estimation codes with the Bill of Quantities codes according to preset association rules, wherein the budget estimation codes are in one-to-one correspondence with the Bill of

### Quantities codes.

According to the integrated management system for large-scale construction provided in this embodiment, the budget estimation codes are associated with the Bill of Quantities codes, thereby laying a foundation for subsequent construction cost management.

In some optional implementations, the contract management subsystem includes:
a contract coding module configured to decompose the multi-tier budget estimation data into a plurality of construction contracts, and code the plurality of the construction contracts respectively by using a preset contract coding model to generate contract codes; and
an association module connected to the contract coding module, and configured to associate the budget estimation codes with the construction contracts, based on the contract codes.

According to the integrated management system for large-scale construction provided in this embodiment, the budget estimation codes are associated with the construction contracts based on the contract codes, so that the construction contract correspond to multi-tier budget estimation data, thereby laying a foundation for subsequent construction cost monitoring.

In some optional implementations, the contract management subsystem further includes:
a construction list module connected to the contract coding module, and configured to acquire a construction management contract, and associate the construction management contract with construction list items in the construction plan list by using the Bill of Quantities codes, wherein the construction management contract and the construction plan list each contain the Bill of Quantities codes, and the construction list items are in one-to-one correspondence with the Bill of Quantities codes.

According to the integrated management system for large-scale construction provided in this embodiment, the construction management contract is associated with construction list items in the construction plans list by using the Bill of Quantities codes, thereby identifying construction list items corresponding to items in the construction management contract, and laying a foundation for subsequent construction control.

Specifically, the construction list module is specifically configured to preprocess the construction management contract, and determine the respective construction list items each of which is on the same tier as a corresponding item in the preprocessed construction management contract by using the Bill of Quantities codes, and thereby associate the preprocessed construction management contract with the construction list items.

According to the integrated management system for large-scale construction provided in this embodiment, the respective construction list items each of which is on the same tier as a corresponding item in the preprocessed construction management contract are determined by using the Bill of Quantities codes, and the preprocessed construction management contract is associated with the construction list items, to ensure association and continuous traceability of estimated budget, budget, and settlement data information of the construction.

In some optional implementations, the construction control subsystem includes:
a construction breakdown module configured to break down each engineering project in each of the construction contracts into a plurality of tiers of construction, thereby determine the work units, and perform coding on the work units to generate the unit codes, wherein the work units are bottommost-tier construction, and wherein a plurality of the unit codes correspond to one contract code;
a work unit association module, connected to the construction breakdown module, and configured to associate the engineering quantity data corresponding to each of the work units with Bill of Quantities codes corresponding to the construction list items, wherein the unit codes are in one-to-one correspondence with the Bill of Quantities codes; and
a work unit settlement module connected to the work unit association module, and configured to calculate settlement amounts in the construction management contract according to the engineering quantity data.

According to the integrated management system for large-scale construction provided in this embodiment, the engineering quantity data corresponding to each of the work units is associated with Bill of Quantities codes corresponding to the construction list items, and settlement amounts in the construction management contract are calculated according to the engineering quantity data, thereby clarifying engineering quantities and settlement amounts for the work units, and achieving accurate management of the engineering quantities and the settlement amounts for the work units.

In some optional implementations, a sum of the engineering quantity data of each of the work units in each of the construction list items is controlled to be less than or equal to rated engineering quantity data of each of the construction list items.

In some optional implementations, the joint-control subsystem includes:
a measurement certificate generation module configured to associate the work units with the Bill of Quantities codes based on the unit codes, and integrate preset construction progress information with preset inspection information to generate the measurement certificate form for the work units;
a cost control module configured to acquire actual incurred amounts for the construction, determine budgetary estimates for the construction based on the association between the budget estimation codes and the Bill of Quantities codes, and manage and control the actual incurred amounts for the construction based on the budgetary estimates for the construction;
a progress monitoring module configured to acquire real-time construction progress information, and monitor the real-time construction progress information based on the measurement certificate form for the work units; and
a quality inspection module configured to associate inspection codes corresponding to the preset inspection information with the unit codes, and inspect the work units by utilizing the association between the inspection codes and the unit codes to obtain a quality inspection result.

According to the integrated management system for large-scale construction provided in this embodiment, a construction cost, construction progress, and construction quality are monitored and controlled based on the measurement certificate form, thereby achieving "atomic" level coordination and unification of the progress, quality and cost in the large-scale construction, and forming a complete system for comprehensive control over the construction cost, construction progress and construction quality, etc., thus achieving the goal of whole-process and all-round information control and management of the large-scale construction.

In some optional embodiments, the cost control module is further configured to compare the budgetary estimates for the construction with the actual incurred amounts for the construction, and predict the construction cost based on a comparison result thereof to obtain a predicted cost for the construction.

According to the integrated management system for large-scale construction provided in this embodiment, the budgetary estimates for the construction are compared with the actual incurred amounts for the construction, and then the construction cost is predicted, which enables reasonable prediction and control of a corresponding cost of a subsequent construction based on the actual incurred amounts for the current construction.

In some optional implementations, the progress monitoring module is specifically configured to generate a percentage of completion of construction progress based on the real-time construction progress information and the preset construction progress information, and manage the real-time construction progress information based on the percentage of completion of construction progress.

The integrated management system for large-scale construction provided in this embodiment enables reasonable management of the real-time construction progress information by means of the percentage of completion of construction progress.

In some optional implementations, the progress monitoring module is further configured to perform coding on the preset construction progress information to obtain construction progress schedule codes, and associate the unit codes with the construction progress schedule codes to obtain work unit progress information.

According to the integrated management system for large-scale construction provided in this embodiment, the unit codes are associated with the construction progress schedule codes to obtain work unit progress information, which provides reference progress information for construction progress of the work units, so that a decision maker can control the progress of the work units in real time based on the progress information.

In a second aspect, the present application provides an integrated management method for large-scale construction, wherein the method is implemented by using the above-described integrated management system for large-scale construction, the method including:
acquiring target construction information, and performing multi-tier categorization and coding on the target construction information to obtain budget estimation codes by a budget estimation sub-system;
decomposing the target construction information to generate a plurality of construction contracts, and associating the plurality of the construction contracts with the budget estimation codes by a contract management subsystem;
breaking down each of the construction contracts to obtain work units, performing coding on the work units to obtain unit codes, and associating engineering quantity data corresponding to each of the work units with a preset construction plan list by a construction control subsystem; and
generating a measurement certificate form based on the association between the construction contracts and the budget estimation codes, and the association between the engineering quantity data and the preset construction plan list, and performing joint-control over a construction cost, construction progress, and construction quality based on the measurement certificate form by a joint-control subsystem, so as to enable integrated management of the large-scale construction.

In a third aspect, the present application provides a computer device, including: a memory and a processor communicatively connected to each other, wherein the memory has computer instructions stored therein, and the processor is configured to execute the computer instructions so as to execute the integrated management method for large-scale construction in the second aspect described above.

In a fourth aspect, the present application provides a computer-readable storage medium having computer instructions stored therein, wherein the computer instructions are configured to cause a computer to execute the integrated management method for large-scale construction in the second aspect described above.

### BRIEF DESCRIPTION OF THE DRAWINGS

To describe technical solutions in the embodiments of the present application or in the prior art more clearly, drawings for use in description of the embodiments or the prior art will be introduced briefly below. Obviously, the drawings described below only represent some implementations of the present application, and those of ordinary skill in the art can also obtain other drawings according to these drawings without creative work.
Fig. 1 is a schematic structural diagram of an integrated management system for large-scale construction according to embodiments of the present application;
Fig. 2 is a schematic flow diagram of working steps of an integrated management system for large-scale construction according to embodiments of the present application;
Fig. 3 is a schematic flow diagram of an integrated management method for large-scale construction according to embodiments of the present application; and
Fig. 4 is a hardware structure diagram of a computer device in embodiments of the present application.

### DETAILED DESCRIPTION

To make the objects, technical solutions and advantages of embodiments of the present application clearer, the technical solutions in the embodiments of the present application will be described below clearly and completely in conjunction with the drawings in the embodiments of the present application. Obviously, the embodiments described are part of, but not all of, the embodiments of the present application. All other embodiments obtained by those skilled in the art without creative work, based on the embodiments in the present application, fall into the protection scope of the present application.

Using the Three Gorges Water Conservancy Project as an example, an engineering construction management system (the Three Gorges Project Management System, abbreviated as TGPMS) is used as a large-scale integrated management information system. The development and application of the engineering construction management system is a long-term and arduous systemic project, needing to overcome technical and managerial challenges throughout its construction. The TGPMS is a high-tech project that integrates modern computer technology, communication technology, database technology, office automation technology, multimedia technology and modern management science. The TGPMS differs from information systems in the general sense in that most of information handled by ordinary information systems is just unstructured information data, meaning that the information is not strongly correlated temporally and logically, and does not require prediction or control of an established goal.

The engineering construction management system uses information engineering methods to convert abstract management concepts and various complex project management rules as well as vast amounts of information data into operable, followable, verifiable, and controllable computer logic operations and judgment, transfer, and call processes, through a database management system, thereby converting scientific management into a human-machine-integrated computer management system.

The TGPMS covers all aspects of the construction of the Three Gorges Project, spanning across various parties including contractors, supervisors, designers, suppliers, and owners. In order to achieve efficient, unified, standardized and coordinated management and control of planning, progress, costs, quality, funding, engineering technology and documents, material and equipment procurement, engineering construction and contract management for the Three Gorges Project, and to form an information system that spans from an implementation level, through a managerial level to a decision-making level of Three Gorges Project management as well as external contacts at various levels, it requires the system be highly integrated to achieve the goal of whole-process and all-round information control and management of the Three Gorges Project through efficient and unified management of information.

The Three Gorges Water Conservancy Project is characterized by large investment, long construction period, geographical dispersion, etc. Furthermore, in the field of project management, its business relationships are not clearly defined structural relationships that are typical of repetitive, cyclical production process management. The characteristics of the Three Gorges Water Conservancy Project impose higher requirements on the design, development and implementation of a TGPMS system model, which should not only meet the needs of current business management, but also adapt to the continuous expansion of business operations in the future.

Embodiments of the present application provide an integrated management system for large-scale construction, by means of which integrated management for large-scale engineering construction is implemented.

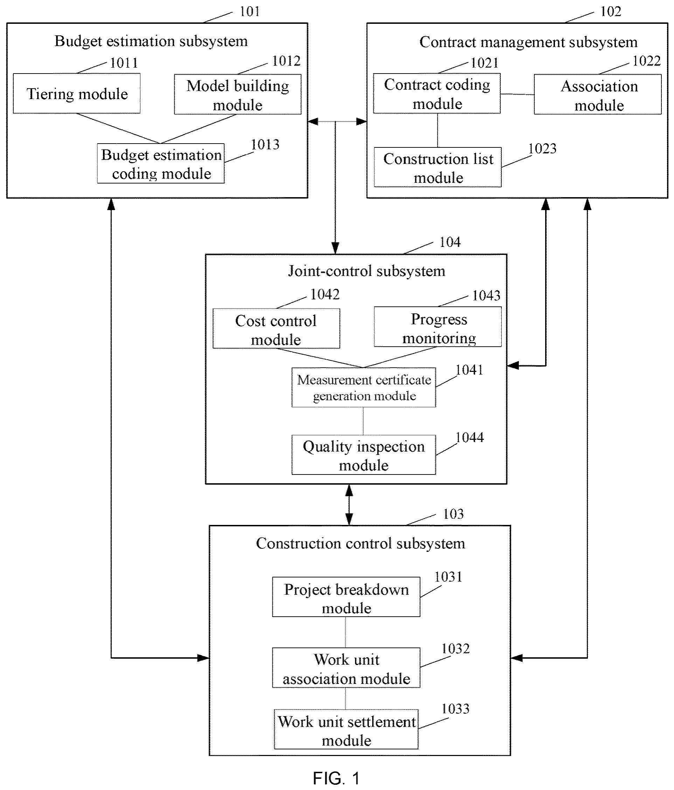

This embodiment provides an integrated management system for large-scale construction, as shown in Fig. 1, the system including the following subsystems:
A budget estimation subsystem 101 is configured to acquire target construction information, and perform multi-tier categorization and coding on the target construction information to obtain budget estimation codes.

A contract management subsystem 102 is connected to the budget estimation subsystem 101, and configured to decompose the target construction information to generate a plurality of construction contracts, and associate the plurality of construction contracts with the budget estimation codes.

A construction control subsystem 103 is connected to the contract management subsystem 102, and configured to break down each of the construction contracts to obtain work units, perform coding on the work units to obtain unit codes, and associate engineering quantity data corresponding to each of the work units with a preset construction plan list.

Specifically, the construction control subsystem 103 associates the work units and construction Bill of Quantities (BOQ), based on the unit codes and BOQ codes, and performs acceptance and settlement of work unit construction. The following outlines its specific processing method and working principle:
(1) The construction management contract and the construction plan list are consistent at a certain tier (e.g., divisional and sub-divisional works), under which respective sub-items may be different, and their summary amounts may also be different. The construction plan list may be formed in batches. In establishing the construction management contract, items at this tier in the construction management contract are construction management settlement items (i.e., bottommost-tier items of the construction management contract), while items at this tier in the construction plan list are summary items.
   Using construction management contract settlement in proportion to progress, construction delivery digital model and other algorithms, multi-dimensional information of the construction including budget, quality, progress, measurement, contract payment, expense reimbursement, and financial settlement is linked, to ensure association and continuous traceability of estimated budget, budget, and settlement data information of the construction, while adapting to the need of integrated business and financial management of the mega-construction across various sectors including hydropower, pumped storage, environmental water services, and new infrastructure.
(2) The summary amounts under this tier in the construction plan list cannot be changed once settlement occurs, but new items may be added. Therefore, unit price of the new items added is set to zero; therefore, all computational items of the work units should be entirely included in the construction plan list.
(3) The sum of engineering quantity data of a work unit under a certain construction plan list item cannot be greater than preset engineering quantity data of the construction plan list item. When a work unit is measured, if an actual engineering quantity is smaller than a designed engineering quantity for the work unit, the actual engineering quantity will be used for calculation. If the actual engineering quantity is larger than the designed engineering quantity of the work unit, the actual designed engineering quantity will be used for calculation.

A joint-control subsystem 104 is connected to both the contract management subsystem 102 and the construction control subsystem 103, and is configured to generate a measurement certificate form based on the association between the construction contracts and the budget estimation codes, and the association between the engineering quantity data and the preset construction plan list, and perform joint-control over a construction cost, construction progress, and construction quality based on the measurement certificate form, so as to enable integrated management of the large-scale construction.

Specifically, in large-scale construction management, due to its complexity and the lack of effective management platform support, it has long been difficult to achieve "atomic" level coordination and unification of progress, quality, and cost control. This results in the inability to maintain temporal and quantitative synchronization among cost, progress, and quality, which greatly affects the effectiveness and timeliness of decision-making by project managers. Therefore, during engineering project advancement or acceptance, a unified certification model, i.e., measurement certification form, is used to simultaneously control the construction cost and the construction progress, while ensuring that the construction quality meets the requirement, to achieve "atomic" level coordination and unification of the construction progress, the construction quality, and the construction cost.

According to the integrated management system for large-scale construction provided in this embodiment, an information system that spans from an implementation level, through a managerial level to a decision-making level of the large-scale construction as well as external contacts is formed by the budget estimation subsystem, the contract management subsystem, the construction control subsystem, and the joint-control subsystem, which achieves integrated management of the large-scale construction, improves the overall management level of the large-scale construction, and provides the decision-making level with accurate and timely analytical decision-making information, thus achieving the goal of whole-process and all-round information control and management of the large-scale construction.

In some optional implementations, the budget estimation subsystem 101 includes the following modules:
A tiering module 1011 is configured to perform multi-tier categorization on items for budget estimation in the target construction information to obtain multi-tier budget estimation data.

Specifically, the tiering module 1011 is configured to perform multi-tier categorization on items for budget estimation to form tiers in a logical relationship, and perform categorization within the tiers according to project management rules, wherein the items for budget estimation are investment information of a current engineering project, including budget estimation contents of various parts, links and tiers in the current engineering project, as shown in Table 1 below:

**Table 1:**

| Sub-construction | Description | CWP code | Description |
|---|---|---|---|
| A0 | Asian Games sports venues | A00 | Asian Games sports venues, Public, Cwp |
| - | - | A01 | Yuexiushan Stadium |
| B0 | Asian Sports Village | B00 | Asian Sports Village, Public, CWP |
| - | - | B01 | Media Village, Residential, MT-F-1 |
| - | - | C18 | Athletes Village, Residential, YD-A-18 |
| - | - | C19 | Athletes Village, Residential, YD-B-1 |
| C0 | Asian Sports Village and Asian Games sports venues (Public) | C00 | Asian Sports Village and Asian Games sports venues, Public, CWP (three-character code) |
| : | : | : | : |
| : | : | : | : |

A model building module 1012 is configured to acquire coding requirements, and generate a coding template matrix, based on preset tier and category definition data, for the coding requirements.

Specifically, for different coding requirements, a general coding template matrix is formed, based on the tiers and definition or description of each category; and engineering project related coding such as budget estimation coding and contract coding is performed, based on the coding template matrix, to provide a basis for subsequent data association and integrated management.

Optionally, the layer code structure in the coding template matrix is composed of different parts, each of which is determined by a length and a delimiter with a mask format, wherein the layer code structure includes: a code name, a layer type, a layer code, and so on. The code name is defined as a brief description of a layer structural code. The layer type code is defined as a type code of a layer structural code of a category. Layer codes may be classified into a number of types in TGPMS system. Steel, timber and cement belong to a material category, and the type of their layer structural codes is COMM (communication). The layer code is defined as a code of a layer structural code of a category. For example, a code of a layer code of the steel category is 1, a code of a timber category is 2, and a code of a cement category is 4. A combination of a layer type code and a layer code may uniquely determine a code of a layer structural code of a category.

A budget estimation coding module 1013 is connected to the tiering module 1011 and the model building module 1012, and is configured to code the multi-tier budget estimation data based on the coding template matrix to generate the budget estimation codes.

Specifically, using the above-described coding template matrix as a coding model, corresponding codes are generated, for budget estimation data of each tier and category, in a certain order (e.g., alphabetic, numeric, etc.), and each code corresponds to a description, which is the same as detailed description in the construction contract, and ultimately a plurality of budget estimation codes are formed, as shown in the table below.

**Table 2:**

| Budget estimation code | Description |
|---|---|
| 01 | Construction costs |
| 0101 | Building construction works |
| 010101 | Civil engineering works |
| 010102 | Curtain wall works |
| 010103 | Steel structure works |
| 010104 | Cable-membrane structure works |
| 010105 | Decoration works |
| 010106 | Signage system works |
| 010199 | Building construction works (common) |
| 0102 | Electrical and Mechanical Installation and Equipment works |
| 010201 | Electrical system works (including fire alarm equipment) |
| 010202 | Air conditioning and ventilation system works |
| : | : |
| : | : |

Optionally, the budget estimation code is a cost code, a multi-character composite code, which is divided into a number of segments, and is matched with a sequence of segments with different numbers and structures according to different engineering requirements, wherein the budget estimation code is a code sequence formed by a combination of independent codes of different natures, and data of the code sequence is subsequently utilized for statistical analysis.

Optionally, the structure of the budget estimation code is: a budget estimation tiering code, a WBS code (construction indicator code) plus a CWP code. For example, the budget estimation code is AA-MMM-BBCCDDEEFFGG-HHHH, wherein AA (budget estimation tiering code) indicates sub-construction, is in the format of a mix of two digit-letter characters, and may be customized by a user; the WBS (construction indicator code) is used to indicate a type of work for a contract project for construction at a specific location; the CWP code is three digits and may be customized by a user. The CWP code indicates regional division of sub-construction, and links design, procurement, installation, etc. Each CWP has its own independent scope, budget and plan. Each stage of the construction is controlled through the above-mentioned CWP. Each divisional region is unique and non-overlapping.

According to the integrated management system for large-scale construction provided in the present embodiment, multi-tier categorization is performed on the items for budget estimation to implement detailed tiering and categorization of sub-items in the items for budget estimation, thereby forming a complete and clear data system of the items for budget estimation, and the multi-tier budget estimation data is coded by using the coding template matrix, thereby achieving accurate coding of the multi-tier budget estimation data, and laying a foundation for monitoring in the subsequent engineering construction process.

In some optional embodiments, the budget estimation coding module 1013 is further configured to acquire Bill of Quantities codes, and associate the budget estimation codes with the Bill of Quantities codes according to preset association rules, wherein the budget estimation codes are in one-to-one correspondence with the Bill of Quantities codes.

According to the integrated management system for large-scale construction provided in this embodiment, the budget estimation codes are associated with the Bill of Quantities codes, thereby laying a foundation for subsequent construction cost management.

In some optional implementations, the contract management subsystem 102 includes the following modules:
A contract coding module 1021 is configured to decompose the multi-tier budget estimation data into a plurality of construction contracts 1021, and code the plurality of the construction contracts respectively by using a preset contract coding model to generate contract codes.

Specifically, each contract code corresponds to a construction contract, and each contract code corresponds to a plurality of BOQ codes, and each Bill of Quantities item corresponds to a unique budget estimation code, as shown in Table 3 below.

**Table 3:**

| Contrac t | BO Q | BOQ name | BO Q type | Unit | Unit price | Quantit y | Amount | Type of cost incurre d |
|---|---|---|---|---|---|---|---|---|
| JS1200 1 | 01 | Three Gorges Building, North Tower | HR C | - | - | - | - | - |
| JS1200 1 | 010 1 | Shale hollow brick masonry wall | POI | M3 | 231.07 | 8867.6 | 2,049,036. 33 | M |
| JS1200 1 | 010 2 | Cast-in-pla ce member with Φ10 round steel rebar | POI | T | 5,248.44 | 1028 | 5,395,396. 32 | V |
| JS1200 1 | 010 3 | Cast-in-pla ce member with Φ22 Grade III steel rebar | POI | T | 5,168.09 | 200 | 1,033,618. 00 | V |
| JS1200 1 | 02 | Measure cost | POI | LO T | 100,000. 00 | 1 | 100,000.0 0 | M |
| Total | - | - | - | - | - | - | 8,578,050. 65 | - |

An association module 1022 is connected to the contract coding module 1021, and is configured to associate the budget estimation codes with the construction contracts, based on the contract codes.

Specifically, by using descriptions corresponding to the tiers, the budget estimation codes are associated with BOQ codes in one or more contracts, and by reviewing and controlling budget estimation on the budget estimation codes, execution codes (including cost control allocations, plan execution packages, etc.) are linked with the controlled budget estimation, for generating a report, wherein the controlled budget estimation includes a budget estimation quantity, a budget estimation unit price, a unit price, and a budget estimation amount. The budget estimation quantity indicates a currently approved quantity of the controlled budget estimation, and has a budget estimation code. When a quantity control flag is set to an asterisk, approved detailed budget estimation with the same budget estimation code is aggregated into the budget estimation quantity. The budget estimation unit price indicates an average unit price. The unit price is equal to the budget estimation amount divided by the quantity. The budget estimation amount indicates a currently approved amount of controlled budget estimation, and has a budget estimation code.

According to the integrated management system for large-scale construction provided in this embodiment, the budget estimation codes are associated with the construction contracts based on the contract codes, so that the construction contract correspond to multi-tier budget estimation data, thereby laying a foundation for subsequent construction cost monitoring.

In some optional implementations, the contract management subsystem 102 further includes the following modules:
A construction list module 1023 is connected to the contract coding module 1021, and is configured to acquire a construction management contract, and associate the construction management contract with construction list items in the construction plans list by using the Bill of Quantities codes, wherein the construction management contract and the construction plans list each contain the Bill of Quantities codes, and the construction list items are in one-to-one correspondence with the Bill of Quantities codes.

Specifically, the construction list module 1023 is specifically configured to preprocess the construction management contract, and determine the respective construction list items each of which is on the same tier as a corresponding item in the preprocessed construction management contract by using the Bill of Quantities codes, and thereby associate the preprocessed construction management contract with the construction list items.

Optionally, as shown in Table 4 below, an EPC (Engineering Procurement Construction) contract in the construction management contract is output, and the actually input EPC contract is preprocessed to obtain an EPC contract in a different tiering mode, as shown in Table 5 below, wherein a row of information corresponding to a same BOQ code are in the same tier in both tables.

**Table 4:**

| BOQ code | Project | Unit | Quantity | Unit price | Amount |
|---|---|---|---|---|---|
| 01 | construction works | - | - | - | 8000 |
| 0101 | Pile foundation works 1 | - | - | - | 3000 |
| 010101 | Excavation | Cubic meter | 10 | 100 | 1000 |
| 010102 | Wall protection | Cubic meter | 4 | 150 | 600 |
| 010103 | Concrete pouring | Cubic meter | 20 | 70 | 1400 |
| 0102 | Pile | - | - | - | 4000 |
| | foundation works 2 | | | | |
| 010201 | Excavation | Cubic meter | 20 | 100 | 2000 |
| 010202 | Wall protection | Cubic meter | 4 | 150 | 600 |
| 010203 | Concrete pouring | Cubic meter | 20 | 70 | 1400 |
| 0103 | Site leveling | Square meter | 10 | 100 | 1000 |
| 0104 | Measure cost | Item | 1 | 2000 | 2000 |
| 02 | Earth and rock excavation | - | - | - | - |
| : | : | : | : | : | : |

**Table 5:**

| BOQ code | Project | Type | Unit | Quantity | Unit price | Amount |
|---|---|---|---|---|---|---|
| 01 | construction works | - | - | - | - | 8000 |
| 0101 | Pile foundation works 1 | Certificate | - | - | - | 3000 |
| 0102 | Pile foundation works 2 | Certificate | - | - | - | 4000 |
| 0103 | Site leveling | Handwork | Square meter | 10 | 100 | 1000 |
| 0104 | Measure | Handwork | Item | 1 | 2000 | 2000 |
| | cost | | | | | |
| 02 | Earth and rock excavation | - | - | - | - | - |
| : | : | : | : | : | : | : |

As can be seen from Tables 4 and 5 above, the BOQ codes 01, 0101, 0102, 0103, 0104, 02, etc. indicate different tiers according to which the input EPC contract is processed.

Optionally, the construction management contract and the construction plan list are consistent at a certain tier. Items at this tier in the construction management contract are construction management settlement items (i.e., bottommost-tier items of the construction management contract), while sub-items at this tier in the construction plan list are summary items. Under this tier, respective items may be different and summary amounts may also be different.

For example, an association relationship between the preprocessed EPC contract and the construction list items are established, and the construction list items under this tier are entered in the EPC contract. The construction plan list as shown in Table 6 below.

**Table 6:**

| BOQ code | Project | Unit | Unit price | Quantity | Amount |
|---|---|---|---|---|---|
| 0101 | Pile foundation works 1 | - | - | - | 3500 |
| 010101 | Excavation | Cubic meter | 10 | 100 | 1000 |
| 010102 | Piling | Piece | 100 | 15 | 1500 |
| 010103 | Concrete pouring | Cubic meter | 100 | 10 | 1000 |
| 0102 | Pile foundation works 2 | - | - | - | 3000 |
| 010201 | Excavation | Cubic meter | 10 | 100 | 1000 |
| 010202 | Piling | Piece | 100 | 10 | 1000 |
| 010203 | Concrete pouring | Cubic meter | 100 | 10 | 1000 |

For Pile foundation works 1 and Pile foundation works 2 in the project column of Table 5 and Table 6, tiers 0101 and 0102 are consistent in the EPC contract corresponding to Table 5 and the construction plan list corresponding to Table 6, and summary amounts for sub-items under the respective tiers are not the same.

According to the integrated management system for large-scale construction provided in this embodiment, the construction management contract is associated with construction list items in the construction plans list by using the Bill of Quantities codes, thereby identifying construction list items corresponding to items in the construction management contract, and laying a foundation for subsequent construction control.

In some optional implementations, the construction control subsystem 103 includes the following modules:
A construction breakdown module 1031 is configured to break down each engineering project in each of the construction contracts into a plurality of tiers of construction, thereby determine the work units, and perform coding on the work units to generate the unit codes, wherein the work units are bottommost-tier construction, and wherein a plurality of the unit codes correspond to one contract code.

Specifically, contents of tiers are formed by artificial setup and breakdown according to specific construction contents and management in the engineering project, and planning and coding by category is performed for different tiers, wherein the current construction is broken down into a plurality of tiers, with construction contents in each tier decreasing successively. An upper tier includes all content of a lower tier. The lowest tier is work units. The work units are coded. A plurality of work units correspond to one engineering contract, that is, a plurality of work unit codes correspond to one engineering contract code.

Optionally, the bottommost-tier construction is work units. For example, the construction is divided into tiers: unit works, divisional works, sub-divisional works, and work units, and each tier corresponds to a coding rule. For example, if 11 represents unit works, 001 represents divisional works, 01 represents sub-divisional works, and 0001 represents a work unit, then a current work unit code is 11001010001.

A work unit association module 1032 is connected to the construction breakdown module 1031, and is configured to associate the engineering quantity data corresponding to each of the work units with Bill of Quantities codes corresponding to the construction list items, wherein the unit codes are in one-to-one correspondence with the Bill of Quantities codes.

A sum of the engineering quantity data of each of the work units in each of the construction list items is controlled to be less than or equal to rated engineering quantity data of each of the construction list items.

Specifically, after the decomposition of the construction into units and the establishment of construction plan list information, engineering quantities of list items in the construction costs section in the construction plan list need to be allocated to associated work units according to construction plans and design calculation documents. Then, during settlement of the construction management contract, budget amounts for the completed construction plan may be calculated according to engineering quantities and budget unit prices of corresponding projects in the construction plan list completed after acceptance of the work units is approved. Meanwhile, the engineering quantities allocated to the associated work units are the design engineering quantities, and may be used for controlling measurement verification.

For example, if the work units are inspection lot works, design engineering quantities of the inspection lot works are associated to the construction list items, as shown in Table 7 below.

**Table 7:**

| Inspection lot code | Project | Corresponding construction list item | Engineering quantities in construction plan list | Inspection lot design quantity |
|---|---|---|---|---|
| UN001 | Excavation | 010101 | 100 | 30 |
| UN001 | Piling | 010102 | 15 | 5 |
| UN001 | Concrete pouring | 010103 | 10 | 3 |
| UN002 | Excavation | 010101 | 100 | 40 |
| UN002 | Piling | 010102 | 15 | 5 |
| UN002 | Concrete pouring | 010103 | 10 | 3 |
| UN003 | Excavation | 010101 | 100 | 30 |
| UN003 | Piling | 010102 | 15 | 5 |
| UN003 | Concrete pouring | 010103 | 10 | 3 |

A work unit settlement module 1033 is connected to the work unit association module 1032, and is configured to calculate settlement amounts in the construction management contract according to the engineering quantity data.

Specifically, for the settlement amounts in the construction management contract, budget amounts for the completed construction plans are calculated according to engineering quantities and budget unit prices (i.e. unit prices in the construction plan list) of corresponding projects in the construction plan list completed after acceptance of the work units is approved, and then, the construction management contract is settled in proportion to corresponding parts of construction costs. The budget amounts for the completed construction plans are interim measurement amounts for settlement in the construction management contract, and are a key basis for a contractor's application for progress-based settlement in the construction management contract and an owner's contract payment. After the contract, budget calculation of the interim measurement amounts is completed, settlement amounts for BOQ items, whose type of cost incurred is marked as "a measurement certificate automatically generates contract costs", corresponding to BOQ in the construction management contract are automatically calculated using a proportional progress-based settlement method according to an approved measurement certificate form.

For example, on the basis of associating the design engineering quantities of the inspection lot works to the construction list items as in Table 7, the process of calculating the interim measurement amounts in construction plan list is shown in Table 8 below, and interim measured results in construction plan list are shown in Table 9 below.

**Table 8:**

| Inspecti on lot code | Project | Correspo nding constructi on list item | Engineerin 9 quantities in constructio n plan list | Inspe ction lot desig n quanti ty | Actual declared quantity | Unit price in constructi on plan list | Interim measur ement amount |
|---|---|---|---|---|---|---|---|
| UN001 | Excava tion | 010101 | 100 | 30 | 40 | 10 | 300 |
| UN001 | Piling | 010102 | 15 | 5 | 5 | 100 | 500 |
| UN001 | Concre te pouring | 010103 | 10 | 3 | 3 | 100 | 300 |
| UN002 | Excava tion | 010101 | 100 | 40 | 30 | 10 | 300 |
| UN002 | Piling | 010102 | 15 | 5 | 5 | 100 | 500 |
| UN002 | Concre te pouring | 010103 | 10 | 3 | 3 | 100 | 300 |

**Table 9:**

| BOQ code | Project | Unit | Unit price | Quantity | Amount | Interim measurement amount |
|---|---|---|---|---|---|---|
| 0101 | Pile foundation works 1 | - | - | - | 3500 | 2200 |
| 010101 | Excavation | Cubic meter | 10 | 100 | 1000 | 600 |
| 010102 | Piling | Piece | 100 | 15 | 1500 | 1000 |
| 010103 | Concrete pouring | Cubic meter | 100 | 10 | 1000 | 600 |
| 0102 | Pile foundation works 2 | - | - | - | 3000 | - |
| 010201 | Excavation | Cubic meter | 10 | 100 | 1000 | - |
| 010202 | Piling | Piece | 100 | 10 | 1000 | - |
| 010203 | Concrete pouring | Cubic meter | 100 | 10 | 1000 | - |

As can be seen from table 8, interim measurement amounts for items "excavation" in the construction list are 300 and 300, respectively, and then, as can be seen from table 9, an interim measurement amount for an item "excavation" in the construction management contract corresponding to the construction list is calculated to be 600. Calculation processes of interim measurement amounts for items "piling" and "concrete pouring" in the construction management contract are the same as for the item "excavation".

According to the integrated management system for large-scale construction provided in this embodiment, the engineering quantity data corresponding to each of the work units is associated with Bill of Quantities codes corresponding to the construction list items, and settlement amounts in the construction management contract are calculated according to the engineering quantity data, thereby clarifying engineering quantities and settlement amounts for the work units, and achieving accurate management of the engineering quantities and the settlement amounts for the work units.

In some optional implementations, the joint-control subsystem 104 includes the following modules:
A measurement certificate generation module 1041 is configured to associate the work units with the Bill of Quantities codes based on the unit codes, and integrate preset construction progress information with preset inspection information to generate the measurement certificate form for the work units.

Specifically, the measurement certificate generation module 1041 associates 1 or more different BOQ codes based on decomposition of the work units and the unit codes.

A cost control module 1042 is configured to acquire actual incurred amounts for the construction, determine budgetary estimates for the construction based on the association between the budget estimation codes and the Bill of Quantities codes, and manage and control the actual incurred amounts for the construction based on the budgetary estimates for the construction.

Specifically, the cost control module establishes budgetary estimates for the construction, and tracks contract costs in the construction management contract and actual incurred amounts for the construction, and establishes control budget estimates and predicts final costs based on budgetary estimates for the constructions. The budgetary estimates for the construction are derived from detailed budgetary estimates, which include quantities, contract unit prices and man-hours to establish the scope required for the entire construction.

Optionally, in order to ensure the implementation effect of the cost control module, costs in the construction must be all embodied in the form of a contract or a virtual contract, and Bill of Quantities BOQ in each contract are associated with cost control codes (generally budget estimation codes), thereby effectively managing and controlling funds for the construction.

A progress monitoring module 1043 is configured to acquire real-time construction progress information, and monitor the real-time construction progress information based on the measurement certificate form for the work units.

Specifically, the progress module is used to record daily real-time construction progress information. The real-time construction progress information mainly includes date, contract code, construction, construction location, detailed location, planned quantity and actual quantity, and is reflected in a cumulative completion quantity so far in a current period, as well as the percentage of the cumulative completion quantity in a planned completion quantity, by means of a daily planned completion quantity and an actual completion quantity.

A quality inspection module 1044 is configured to associate inspection codes corresponding to the preset inspection information with the unit codes, and inspect the work units by utilizing the association between the inspection codes and the unit codes to obtain a quality inspection result.

Specifically, based on the contract codes and the unit codes, the inspection codes are associated with the unit codes, and quality inspection is performed for sub-items under inspection according to preset inspection criteria.

According to the integrated management system for large-scale construction provided in this embodiment, a construction cost, construction progress, and construction quality are monitored and controlled based on the measurement certificate form, thereby achieving "atomic" level coordination and unification of the progress, quality and cost in the large-scale construction, and forming a complete system for comprehensive control over the construction cost, construction progress and construction quality, etc., thus achieving the goal of whole-process and all-round information control and management of the large-scale construction.

In some optional embodiments, the cost control module 1042 is further configured to compare the budgetary estimates for the construction with the actual incurred amounts for the construction, and predict the construction cost based on a comparison result thereof to obtain a predicted cost for the construction.

According to the integrated management system for large-scale construction provided in this embodiment, the budgetary estimates for the construction are compared with the actual incurred amounts for the construction, and then the construction cost is predicted, which enables reasonable prediction and control of a corresponding cost of a subsequent construction based on the actual incurred amounts for the current construction.

In some optional implementations, the progress monitoring module 1043 is specifically configured to generate a percentage of completion of construction progress based on the real-time construction progress information and the preset construction progress information, and manage the real-time construction progress information based on the percentage of completion of construction progress.

Specifically, performance is measured in monetary terms by comparing the amount of work actually completed (i.e., real-time construction progress information) and the cost (i.e., the actual amount incurred for the construction) with an amount of work and cost in an investment plan, and the construction progress and the construction cost are monitored and analyzed based on quantitative indicators of construction performance.

The integrated management system for large-scale construction provided in this embodiment enables reasonable management of the real-time construction progress information by means of the percentage of completion of construction progress.

In some optional implementations, the progress monitoring module 1043 is further configured to perform coding on the preset construction progress information to obtain construction progress schedule codes, and associate the unit codes with the construction progress schedule codes to obtain work unit progress information.

Specifically, the unit codes corresponding to the BOQ items in the construction management contract are associated with the construction progress schedule codes, such that the unit codes correspond to the work unit progress information.

Optionally, the work unit progress information includes the following: location code, which indicates a construction location of the contract project, for example using a budget estimation tiering code in D3105 (a construction location of the contract project, i.e., user-defined item for budget estimation) to mark a location; detailed location, which is detailed construction location of the contract project, such as code data defined in D9079 (a detailed construction location of the contract project, i.e., user-defined sub-item of an item for budget estimation); date of occurrence, which is a date of occurrence of the preparation to fill in the daily completion quantity; unit, which is a unit of measurement for a WBS code entered for a type of work; daily completion engineering quantity, which is a daily completion quantity of work for a WBS code entered for a type of work under a detailed location of the contract project; and daily planned engineering quantity, which is a daily planned quantity of work for a WBS code entered for a type of work under a detailed location of the contract project.

According to the integrated management system for large-scale construction provided in this embodiment, the unit codes are associated with the construction progress schedule codes to obtain work unit progress information, which provides reference progress information for construction progress of the work units, so that a decision maker can control the progress of the work units in real time based on the progress information.

Working steps of an integrated management system for large-scale construction is described below by using a specific embodiment.

### Embodiment 1:

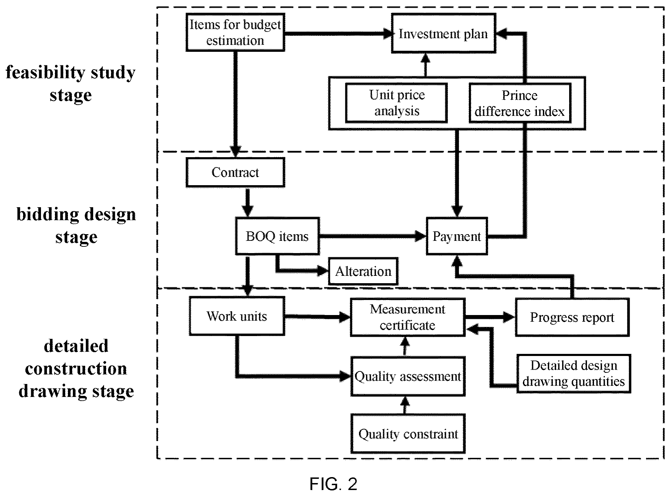

As shown in Fig. 2, working steps of an integrated management system for large-scale construction include the following stages:
A feasibility study stage: an investment plan of the project is formulated based on items for budget estimation of the current construction, i.e., estimating an investment corresponding to engineering quantities by budget estimation. Meanwhile, for a complex large-scale construction project, the investment plan is adjusted according to analysis of contract unit prices and a price difference index over different periods, so as to control costs through the engineering quantities and the contract unit prices in the items for budget estimation, to achieve cost traceability.

A bidding design stage: based on the items for budget estimation, the engineering quantities are decomposed to form a mode of "contract + BOQ", i.e., decomposed into a format of a contract code plus a BOQ code to obtain a Bill of Quantities, and subsequently, the Bill of Quantities is associated and coupled with the investment plan through a payment link for items of the current construction; meanwhile, the payment link is also influenced by analysis of the contract unit prices and the price difference index over different periods.

In the bidding design stage, functions of a complex large-scale construction project are broken down into smaller modules and coupled, while strict management and quality control are carried out.

Detail construction plan stage: a current engineering project is decomposed into plurality of work units, and a coupling relationship is established with a contract involved in the bidding design stage by means of the BOQ. For complex large-scale construction, control is achieved at the detail construction plan stage by periodic coupling and linking of the decomposed units at varying levels of granularity across different bidding and design stages.

In the detailed construction plan stage, quality assessment is conducted for each work unit obtained after decomposition of the current engineering project to determine if the quality meets standards. That is, the completion of engineering quantities, which is based on the constraint condition that the quality of each work unit meets the standards, serves as progress of qualified construction completion. Quality management specifies the project's quality standards, defines inspection criteria for work units and construction procedures, and controls construction quality.

In the detailed construction plan stage, it needs to take into account collaboration and cooperation between multiple organizations. Besides, material supplies also need to be considered to ensure smooth progress of the project.

In addition, based on detailed design drawing quantities and quality assessment results, corresponding measurement certificates for respective work units are obtained. Subsequently, a progress report is formed according to all the measurement certificates. Finally, payment control is carried out based on the progress report and the like.

It can be seen that the payment process is controlled by multiple factors in the feasibility study stage, the bidding design stage, and the detailed construction plan stage, i.e., jointly controlled by cost, progress, and quality. Progress is measured and controlled by using an Earned Value (EV) method and price variances. Investment costs are calculated by using the BOQ quantities in the bidding stage. Quality assessment is conducted based on a quality constraint condition, to implement control and management of the construction process and the quality of major materials. Progress measurement, investment cost calculation, and quality assessment are all directed to work units. At the work unit level of the current engineering project, the work units are managed through measurement certificates of engineering quantities to control contract settlements. Therefore, after the quality assessment of the work units is approved, it is possible to track the progress of the project and an actual completion status of the investment plan.

In summary, based on budget estimation decomposition, contract decomposition, progress plan decomposition, design drawings, and quality control unit, comprehensive and coordinated control and management of cost, progress and quality is achieved, and construction costs, progress, quality and fund status are monitored and predicted timely and effectively by using a variety of project prediction methods, thereby enhancing the accuracy and scientific basis of decision-making, and effectively ensuring the achievement of the three main control objectives in construction: cost, progress and quality. Changes in the certified quantities in the measurement certificates are reflected simultaneously in both progress and cost, and quality assessment determines whether a work unit can continue to undergo measurement certification. Thus, linkage of progress, quality, and cost is achieved completely.

In addition, when the above-described integrated management system for large-scale construction is applied to the TGPMS, all parties involved in the construction can analyze, process, and monitor various data in real time, thus achieving better management of the project. For example, in cost control, before the use of the TGPMS, the information on the actual incurred cost of the project could not be accurately and timely reflected, which could easily lead to errors in contract settlement, such as over-settlement, under-settlement, delayed settlement, etc., which not only could cause unfavorable impact on fund management, but also may leave some difficult economic problems in the acceptance of the completion of the construction. Using the TGPMS, each item in the contract has a predicted value, and all documents required for payment must be entered into the system and verified before settlement. Once the system detects that the predicted value is exceeded, it will give an alert, prompting a manager to focus his attention on such items, timely perform corresponding processing or problem tracing, and ultimately achieve the purpose of control.

Goals of a construction management system for hydropower construction are: on the basis of establishing a scientific management system, to build a construction management information system covering each engineering management department of a head office as well as entities for design, supervision, construction, etc., including a computer network and a corresponding database and software system; to form an efficient, unified, standardized and coordinated management and control system for planning and progress, quality, owner's fund, engineering technology and documents, material and equipment procurement, engineering construction and contract management, etc. for hydropower and water conservancy construction; and to form an information system that spans from an implementation level, through a managerial level to a decision-making level of Three Gorges Project management as well as external contacts at various levels, so as to improve the overall management level of the Three Gorges Project and to provide the decision-making level with accurate and timely information necessary for analysis and decision-making. Through the efficient and unified management of information, and in conjunction with the current situation, various information of entities for design, supervision, construction, etc. are unified, to achieve the strategic goal of whole-process and all-round information control and management of the Three Gorges Project.

Embodiments of the present application also provide an embodiment of an integrated management method for large-scale construction. It is to be noted that steps illustrated in flow diagrams of the accompanying drawings may be performed in a computer system such as a set of computer executable instructions, and although a logical sequence is illustrated in such a flow diagram, in some situations, steps shown or described may be performed in a sequence different from that illustrated here.

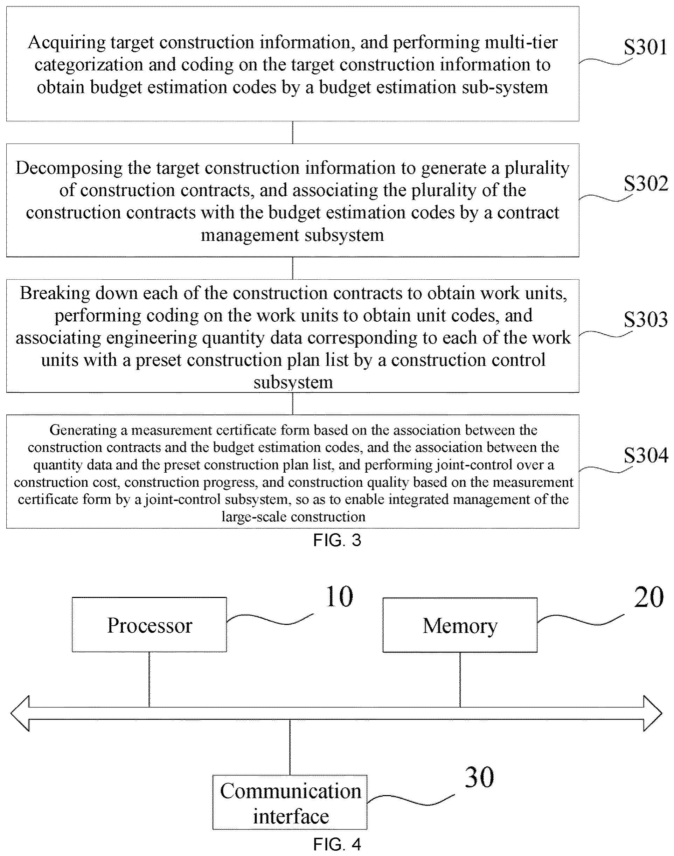

In this embodiment, there is provided an integrated management method for large-scale construction. The method may be used in an integrated management system for large-scale construction described above. Fig. 3 is a flow diagram of an integrated management method for large-scale construction according to an embodiment of the present application. As shown in Fig. 3, the process includes steps as follows:
Step S301, acquiring target construction information, and performing multi-tier categorization and coding on the target construction information to obtain budget estimation codes by a budget estimation sub-system.

Step S302, decomposing the target construction information to generate a plurality of construction contracts, and associating the plurality of the construction contracts with the budget estimation codes by a contract management subsystem.

Step S303, breaking down each of the construction contracts to obtain work units, performing coding on the work units to obtain unit codes, and associating engineering quantity data corresponding to each of the work units with a preset construction plan list by a construction control subsystem.

Step S304, generating a measurement certificate form based on the association between the construction contracts and the budget estimation codes, and the association between the quantity data and the preset construction plan list, and performing joint-control over a construction cost, construction progress, and construction quality based on the measurement certificate form by a joint-control subsystem, so as to enable integrated management of the large-scale construction.

The integrated management method for large-scale construction in this embodiment is applied to an integrated management system for large-scale construction in the embodiment shown in Fig. 1, and thus specific implementations of step S301 and step S304 may refer to the corresponding description in the foregoing section of the embodiment shown in Fig. 1, and will not be repeated here.

It may be appreciated that functions and beneficial effects of the method in this embodiment correspond to functions and beneficial effects of the integrated management system for large-scale construction in the embodiment shown in Fig. 1, and will not be repeated here.

Embodiments of the present application also provide a computer device having the integrated management system for large-scale construction shown in Fig. 1.

Referring to Fig. 4, which is a schematic structural diagram of a computer device provided in an optional embodiment of the present application, as shown in Fig. 4, the computer device includes: one or more processors 10, a memory 20, and interfaces for connecting various components, including a high-speed interface and a low-speed interface. The components are connected to each other by different buses, and may be mounted on a common motherboard or mounted in other ways as needed. The processor may process instructions executed in the computing device, including instructions stored in or on memory to display on an external input/output means (e.g., a display device coupled to the interface) graphical information of a GUI. In some optional implementations, a plurality of processors and/or a plurality of buses may be used with a plurality of memories and a plurality of memories, if needed. Similarly, a plurality of computer devices may be connected, and the devices provide part of necessary operations (e.g., as a server array, a group of blade servers, or a multiprocessor system). One processor 10 is used as an example in Fig. 4.

The processor 10 may be a central processing unit, a network processing unit, or a combination thereof. The processor 10 may also include a hardware chip. The above-mentioned hardware chip may be an application-specific integrated circuit, a programmable logic device, or a combination thereof. The above-mentioned programmable logic device may be a complex programmable logic device, a field programmable logic gate array, a generic array logic, or any combination thereof.

The memory 20 stores instructions executable by the at least one processor 10, to cause the at least one processor 10 to implement the method illustrated in the above embodiment.

The memory 20 may include a program storing area and a data storing area, wherein the program storing area may store an operating system, and an application program required for at least one function; and the data storing area may store data created according to the use of the computer device, and the like. In addition, the memory 20 may include a high-speed random access memory, and may also include a non-transitory memory, such as at least one magnetic disk storage device, flash memory device, or other non-transitory solid-state storage device. In some optional implementations, the memory 20 optionally includes memories provided remotely from the processor 10, and these remote memories may be connected to the computer device through a network. Examples of the above-mentioned network include, but are not limited to, the Internet, an intranet, a local area network, a mobile communication network, and combinations thereof.

The memory 20 may include a volatile memory, such as a random-access memory; the memory may also include a non-volatile memory, such as a flash memory, a hard disk or a solid-state disk; and the memory 20 may also include a combination of the above-mentioned types of memories.

The computer device also includes a communication interface 30 for communication between the computer device and other devices or communication networks.

Embodiment of the present application also provide a computer-readable storage medium. The above-described method according to embodiments of the present application may be implemented in hardware or firmware, or implemented as computer code that may be recorded on a storage medium, or implemented as computer code that is downloaded over a network and originally stored on a remote storage medium or non-transitory machine-readable storage medium, and that is to be stored on a local storage medium, such that the method described here may be processed by such software stored on a storage medium that uses a general purpose computer, a dedicated processor, or programmable or dedicated hardware. The storage medium may be a magnetic disk, an optical disk, a read-only memory, a random-access memory, a flash memory, a hard disk, a solid-state disk, or the like; and optically, the storage medium may also include a combination of the above-mentioned types of memories. It may be appreciated that the computer, processor, microprocessor, controller, or programmable hardware includes a storage component that may store or receive software or computer code, and when the software or computer code is accessed and executed by the computer, processor, or hardware, the method illustrated in the above embodiment is implemented.

Although embodiments of the present application are described in conjunction with the accompanying drawings, those skilled in the art may make various modifications and variations without departing from the spirit and scope of the present application, and such modifications and variations fall within the scope defined by the appended claims.

## Claims

1. An integrated management system for large-scale construction, wherein the system comprises:
a budget estimation subsystem, configured to acquire target construction information, and perform multi-tier categorization and coding on the target construction information to obtain budget estimation codes;
a contract management subsystem, connected to the budget estimation subsystem, and configured to decompose the target construction information to generate a plurality of construction contracts, and associate the plurality of construction contracts with the budget estimation codes;
a construction control subsystem, connected to the contract management subsystem, and configured to break down each of the construction contracts to obtain work units, perform coding on the work units to obtain unit codes, and associate engineering quantity data corresponding to each of the work units with a preset construction plan list; and
a joint-control subsystem, connected to both the contract management subsystem and the construction control subsystem, and configured to generate a measurement certificate form based on the association between the construction contracts and the budget estimation codes and the association between the engineering quantity data and the preset construction plan list, and perform joint-control over a construction cost, construction progress and construction quality based on the measurement certificate form, so as to enable integrated management of the large-scale construction.

2. The system according to claim 1, wherein the budget estimation subsystem comprises:
a tiering module, configured to perform multi-tier categorization on items for budget estimation in the target construction information to obtain multi-tier budget estimation data;
a model building module, configured to acquire coding requirements, and generate a coding template matrix, based on preset tier and category definition data, for the coding requirements; and
a budget estimation coding module, connected to the tiering module and the model building module, and configured to perform coding on the multi-tier budget estimation data based on the coding template matrix to generate the budget estimation codes.

3. The system according to claim 2, wherein the budget estimation coding module is further configured to acquire Bill-of-Quantities codes, and associate the budget estimation codes with the Bill-of-Quantities codes according to preset association rules, wherein the budget estimation codes are in one-to-one correspondence with the Bill-of-Quantities codes.

4. The system according to claim 3, wherein the contract management subsystem comprises:
a contract coding module, configured to decompose the multi-tier budget estimation data into a plurality of construction contracts, and perform coding on the plurality of construction contracts respectively by using a preset contract coding model to generate contract codes; and
an association module, connected to the contract coding module, and configured to associate the budget estimation codes with the construction contracts based on the contract codes.

5. The system according to claim 4, wherein the contract management subsystem further comprises:
a construction list module, connected to the contract coding module, and configured to acquire a construction management contract, and associate the construction management contract with construction list items in the construction plan list by using the Bill-of-Quantities codes, wherein the construction management contract and the construction plan list each contain the Bill-of-Quantities codes, and the construction list items are in one-to-one correspondence with the Bill-of-Quantities codes.

6. The system according to claim 5, wherein the construction list module is specifically configured to preprocess the construction management contract, and determine the respective construction list items each of which is on the same tier as a corresponding item in the preprocessed construction management contract by using the Bill-of-Quantities codes, and thereby associate the preprocessed construction management contract with the construction list items.

7. The system according to claim 5, wherein the construction control subsystem comprises:
a construction breakdown module, configured to break down each engineering project in each of the construction contracts into a plurality of tiers of construction, thereby determine the work units, and perform coding on the work units to generate the unit codes, wherein the work units are bottommost-tier construction, and wherein a plurality of the unit codes correspond to one contract code;
a work unit association module, connected to the construction breakdown module, and configured to associate the engineering quantity data corresponding to each of the work units with each of the Bill-of-Quantities codes corresponding to the construction list items, wherein the unit codes are in one-to-one correspondence with the Bill-of-Quantities codes; and
a work unit settlement module, connected to the work unit association module, and configured to calculate a settlement amount of the construction management contract according to the engineering quantity data.

8. The system according to claim 7, wherein a sum of the engineering quantity data of each of the work units in each of the construction list items is controlled to be less than or equal to rated engineering quantity data of each of the construction list items.

9. The system according to claim 7, wherein the joint control subsystem comprises:
a measurement certificate generation module, configured to associate the work units with the Bill-of-Quantities codes based on the unit codes, and integrate preset construction progress information with preset inspection information to generate the measurement certificate form for the work units;
a cost control module, configured to acquire an actual incurred amount for the construction, determine a budgetary estimate for the construction based on the association between the budget estimation codes and the Bill-of-Quantities codes, and manage and control the actual incurred amount for the construction based on the budgetary estimate for the construction;
a progress monitoring module, configured to acquire real-time construction progress information, and monitor the real-time construction progress information based on the measurement certificate form for the work units; and
a quality inspection module, configured to associate inspection codes corresponding to the preset inspection information with the unit codes, and inspect the work units by utilizing the association between the inspection codes and the unit codes to obtain a quality inspection result.

10. The system according to claim 9, wherein the cost control module is further configured to compare the budgetary estimate for the construction with the actual incurred amount for the construction, and predict the construction cost based on a comparison result thereof to obtain a predicted cost for the construction.

11. The system according to claim 9, wherein the progress monitoring module is specifically configured to generate a percentage of completion of construction progress based on the real-time construction progress information and the preset construction progress information, and manage the real-time construction progress information based on the percentage of completion of construction progress.

12. The system according to claim 9, wherein the progress monitoring module is further configured to perform coding on the preset construction progress information to obtain construction progress schedule codes, and associate the unit codes with the construction progress schedule codes to obtain work unit progress information.

13. An integrated management method for large-scale construction, wherein the method is implemented by using the integrated management system for large-scale construction of any one of claims 1 to 12, wherein the method comprises:
acquiring target construction information, and performing multi-tier categorization and coding on the target construction information to obtain budget estimation codes by a budget estimation sub-system;
decomposing the target project information to generate a plurality of construction contracts, and associating the plurality of the construction contracts with the budget estimation codes by a contract management subsystem;
breaking down each of the construction contracts to obtain work units, performing coding on the work units to obtain unit codes, and associating engineering quantity data corresponding to each of the work units with a preset construction plan list by a construction control subsystem; and
generating a measurement certificate form based on the association between the construction contracts and the budget estimation codes and the association between the engineering quantity data and the preset construction plan list, and performing joint-control over a construction cost, construction progress and construction quality based on the measurement certificate form by a joint-control subsystem, so as to enable integrated management of the large-scale construction.

14. A computer device, comprising:
a memory and a processor communicatively connected to each other, wherein the memory has computer instructions stored therein, and the processor is configured to execute the computer instructions so as to execute the integrated management method for large-scale construction of claim 13.

15. A computer-readable storage medium, having computer instructions stored therein, wherein the computer instructions are configured to cause a computer to execute the integrated management method for large-scale construction of claim 13.
